# FASCICULE DE BREVET EUROPEEN

(11) **EP 2 934 194 B1**
(45) Date de publication et mention de la délivrance du brevet: **08.11.2017**
(21) Numéro de dépôt: 13826861.0
(22) Date de dépôt: 11.12.2013
(51) Int. Cl.: A23L 3/40, A23B 4/00, A23B 4/005, A23B 4/01, A23B 4/023, A23B 4/03

(54) **PROCÉDÉ DE SÉCHAGE DE PRODUITS ALIMENTAIRES**
PROZESS UM LEBENSMITTELN ZU TROCKNEN
METHOD FOR DRYING FOOD PRODUCTS

(30) Priorité: 18.12.2012 FR 1262278
(43) Date de publication de la demande: 28.10.2015
(73) Titulaire: Lutetia, 60128 Plailly (FR)
(72) Inventeur: DEUMIER, François, 95160 Montmorency (FR); FRENOT, Jean-Claude, 95400 Arnouville (FR); LONGO, Philippe, 92190 Meudon (FR)
(74) Mandataire: Nony
(86) Numéro de dépôt international: PCT/IB2013/060818
(87) Numéro de publication internationale: WO 2014/097059

(56) Documents cités:
- EP-A1- 0 085 426
- EP-A1- 1 066 762
- EP-A1- 1 321 041
- EP-A1- 2 371 222
- FR-A- 1 026 186
- Anonymous: "Phase diagram - Wikipedia, the free encyclopedia", , 15 October 2012 (2012-10-15), XP055294257, Retrieved from the Internet: URL:https://en.wikipedia.org/w/index.php?t itle=Phase_diagram&oldid=517924941 [retrieved on 2016-08-08]

## Description

La présente invention a pour objet un procédé de séchage de produits alimentaires, notamment carnés, dans un malaxeur.

Les produits alimentaires carnés recouvrent essentiellement les produits de charcuterie cuits tels que le jambon et les produits de charcuterie crus tels que par exemple la poitrine, le jambon sec, le magret, ou encore les produits de charcuterie connus sous les noms de coppa (à base d'échine), pancetta (à base de poitrine), viande des Grisons, Brési, ainsi que certaines pièces de volaille. Tous ces produits peuvent nécessiter au cours de leur fabrication un malaxage lequel est généralement effectué sous vide.

Le malaxage est typiquement effectué dans un malaxeur qui peut comporter une cuve hermétique fermée, montée rotative autour de son axe longitudinal lequel est sensiblement horizontal ou, le cas échéant, incliné par rapport au sol. L'enceinte est définie par la cuve, elle est fermée par une porte étanche, et peut être mise sous vide.

Le malaxeur sous vide est un équipement utilisé en charcuterie-salaison pour réaliser des opérations telles que la décongélation, le salage, le marinage, la cuisson ou encore le fumage.

Le document FR 1 026 186 décrit un mode opératoire pour fabriquer du saucisson sec dans lequel la viande est malaxée sous vide, avec un vide de 50 à 70 cm de mercure, soit de 670 à 933 mbar. Dans certaines réalisations, le malaxeur est muni d'un système de chauffage.

EP 1 321 041 divulgue un procédé de fumage où des produits sont soumis à une étape de séchage sans apport de chaleur où la pression est réduite.

Le document EP 0 085 426 décrit un procédé de séchage de matières végétales dans une cuve de malaxeur, équipée d'un système de chauffage et de mise sous vide partiel, de 350 à 60 torr, i.e., 466-78 mbar.

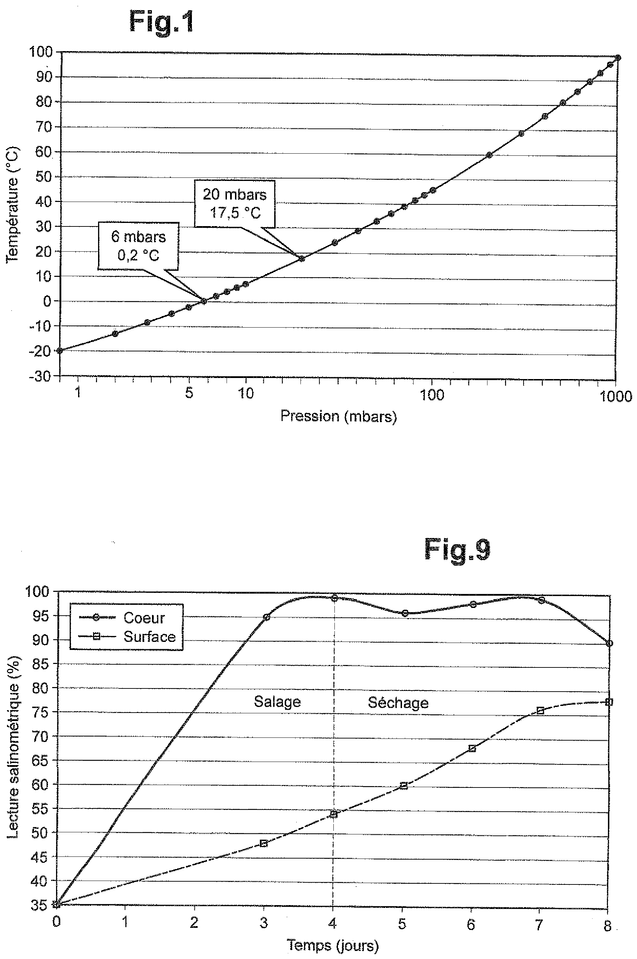

La mise sous vide de produits alimentaires peut permettre de réaliser un séchage de ces derniers, aussi appelé évaporation sous vide, dans la mesure où la pression est assez basse (voir figure 1). L'évaporation étant un processus endothermique, cette dernière conduit à un refroidissement du produit alimentaire, et donc à une dégradation rapide des performances de séchage des pompes à vide.

Le séchage sous vide évaporatif présente l'avantage de s'affranchir en partie de la géométrie du produit.

En effet, si la propagation des ondes de pression a une vitesse limitée, à l'équilibre, la pression d'un milieu est quasi-isotrope, notamment dans sa phase gazeuse communicante. Ainsi, par rapport à des méthodes de séchage classiques en conditions de transfert interne limitant, l'évaporation sous vide permet un séchage plus homogène dans toute l'épaisseur du produit, ce qui peut permettre de réduire l'apparition d'un phénomène de croutage.

Toutefois, il est encore possible d'améliorer l'homogénéité du séchage entre le coeur et la pellicule extérieure du produit obtenu à l'issue des procédés de séchage sous vide connus.

En effet, lors de l'évaporation sous vide de l'eau d'un produit alimentaire solide, l'eau au contact du milieu extérieur (pellicule extérieure, surface interne occluse) est susceptible de s'évaporer, l'effet évaporatif est cependant plus marqué dans les zones en contact important avec le milieu extérieur (pellicule extérieure) et moins marqué dans les zones présentant une surface spécifique de contact réduite (coeur du produit).

En conséquence, un gradient de séchage entre le coeur et la pellicule extérieure du produit alimentaire est obtenu, lequel est moins marqué que dans la mise en oeuvre de procédés de séchage classiques, mais qui peut toujours s'avérer significatif.

Il est, par ailleurs, connu notamment de EP 1 066 762, de chauffer un produit alimentaire avant de le sécher par évaporation sous vide. Un séchage sous vide réalisé sur un aliment préalablement chauffé à 20 °C peut conduire à une perte d'environ 5 % de la masse d'eau présente avant séchage et à un refroidissement du produit jusqu'à 0 °C, et, à terme, à la congélation dudit produit. La déshydratation obtenue à l'issue d'un tel séchage peut toutefois être améliorée.

En outre, la fabrication de produits de salaison et de certaines charcuteries peut comporter plusieurs étapes, notamment des étapes de salage, séchage et étuvage.

Dans le cas de produits destinés au séchage, les méthodes conventionnelles de salage reposent sur un salage à sec par mise en contact de l'aliment avec le sel, soit en excès, soit par dosage. Certaines méthodes basées sur l'immersion en saumure persistent et certains industriels utilisent, d'ores et déjà, des malaxeurs pour réaliser le salage de leurs pièces.

Parmi les opérations de la phase dite « chaude », le séchage et l'étuvage sont convectives, ce qui a pour conséquence notable que le transfert interne de matière comme de chaleur est limitant.

Les conséquences pour le transformateur sont le risque de croutage si la déshydratation en surface est trop rapide et la longueur du séchage si les produits sont épais.

Classiquement, les opérations de salage et d'étuvage - séchage sont séquencées et la seconde - qualifiée de « chaude » - n'est initiée que lorsque le salage est terminé au sens qu'il est homogène entre la pellicule extérieure et le coeur du produit.

Le salage au sel sec peut être un procédé relativement lent nécessitant tout d'abord la dissolution des ingrédients au niveau de la pellicule extérieure du produit avant leur migration de la pellicule extérieure au coeur. Cette migration obéit aux lois de la diffusion, ce qui fait du salage à sec une opération particulièrement lente. Pour des jambons de 9 kg, la pratique recommande des salages de 9 à 13 jours selon la coupe et la qualité des jambons utilisés. A l'issue de cette phase, les ingrédients ont pénétré l'aliment et le produit a perdu environ 3 à 6 % de son poids mais la diffusion à coeur n'est pas terminée.

Une opération de repos en plusieurs phases peut s'avérer nécessaire afin d'obtenir un produit salé de façon homogène. La durée de ce repos peut être d'environ 1 mois.

Après repos, les pertes de poids représentent environ 10 %. Ici encore, la lenteur des mécanismes diffusifs impliqués dans les phénomènes explique la durée importante de l'opération.

Durant le salage et le repos, la température est maintenue en dessous de 5 °C. On parle de phase froide. L'objectif est d'inhiber au maximum le développement des flores pathogènes et d'altération.

Une fois le jambon salé à coeur de façon équilibrée, la stabilisation obtenue permet de passer en phase chaude et de conduire les opérations de séchage, d'affinage et d'étuvage. Si la basse température ralentit le développement bactérien, le produit reste non stabilisé pendant la durée du salage et du repos.

Il existe un besoin pour améliorer la déshydratation obtenue par les procédés de séchage connus.

Il existe un besoin pour disposer de procédés produisant un séchage le plus homogène possible entre la pellicule extérieure et le coeur d'un produit alimentaire.

Il existe encore un besoin pour disposer de procédés de préparation de produits plus rapides et efficaces.

L'invention vise précisément à répondre à tout ou partie des besoins précités.

Selon un premier aspect, l'invention concerne un procédé de séchage d'un produit alimentaire, comportant les étapes consistant à :
a) introduire dans une enceinte le produit alimentaire, l'enceinte étant définie par la cuve d'un malaxeur, et
b) sécher le produit alimentaire présent dans l'enceinte par mise sous vide de l'enceinte,
les conditions de pression et de température pendant l'étape de séchage étant choisies de façon à se placer dans le domaine du diagramme de phase de l'eau pure où celle-ci est à l'état gazeux, procédé dans lequel un apport de chaleur au produit présent dans l'enceinte est effectué lorsque l'enceinte est mise sous vide durant l'étape b) de façon à maintenir constante et/ou augmenter la température dudit produit durant tout ou partie du séchage par mise sous vide de l'enceinte, l'apport de chaleur étant réalisé par transfert thermique entre au moins un fluide caloporteur et le produit, le fluide caloporteur circulant au sein d'une double enveloppe de l'enceinte, et/ou par irradiation dudit produit par un rayonnement électromagnétique. Le niveau de vide utilisé dans l'enceinte lors de cette étape correspond à une pression absolue inférieure à 200 mbar, mieux inférieure à 100 mbar, mieux inférieure à 75 mbar, encore mieux inférieure à 40 mbar.

En effet, plus la pression est faible, moins la température doit être importante pour évaporer une quantité d'eau donnée dans un laps de temps donné. Il est donc important que la pression soit suffisamment faible, de façon à ne pas avoir à chauffer trop le produit lors de l'étape de séchage. En particulier, il peut être important de ne pas cuire le produit lors de l'étape de séchage.

Les conditions de pression et de température pendant l'étape de séchage sont choisies de façon à se placer dans le domaine du diagramme de phase de l'eau pure où celle-ci est à l'état gazeux.

L'invention permet avantageusement, en compensant l'endothermie de l'évaporation par un apport de chaleur au produit, d'améliorer la déshydratation du produit obtenue à l'issue de l'étape de séchage par le vide. L'apport de chaleur peut notamment être effectué au moyen d'une étape de chauffage.

La température de l'enceinte et/ou du produit dans l'enceinte étant amenée ou maintenue à des valeurs variables selon l'objectif technologique :
- Pour une simple compensation de la chaleur latente d'évaporation, la température peut être fixée entre 0 et 10 °C, notamment dans le cas du maigre pré-séché pour fabriquer du saucisson sec ;
- Pour un traitement à froid de produits plutôt épais comme le jambon cru ou sec, la température peut atteindre 10 à 25 °C ;
- Pour un traitement à chaud de produits comme les poitrines ou les salaisons étuvées à chaud, la température peut atteindre 25 à 55 °C.

Comme détaillé dans la suite, il est également possible dans le cadre de l'invention d'induire un profil de température donné entre le coeur et la surface, par exemple, en créant un gradient de température entre une pellicule extérieure plus froide et le coeur du produit plus chaud. Dans ces conditions, un séchage plus homogène au sein du produit est avantageusement obtenu.

Par « malaxeur », il faut comprendre un dispositif apte à mettre en mouvement le produit alimentaire du fait de la mise en mouvement de l'enceinte et/ou de la présence d'un organe de brassage au sein de cette dernière.

Par « apport de chaleur au produit », il faut comprendre que le produit reçoit effectivement de l'énergie du fait du transfert thermique avec le fluide caloporteur, par exemple en direct ou par l'intermédiaire d'une double-enveloppe, et/ou de l'irradiation. Cet apport de chaleur permet au produit de ne pas se refroidir durant tout ou partie du séchage par mise sous vide de l'enceinte.

Le produit alimentaire peut être un produit carné. L'invention n'est toutefois pas limitée à l'application aux produits carnés mais peut s'appliquer à d'autres produits comme par exemple à des produits alimentaires à base de poisson.

Le malaxeur peut être équipé d'une cuve rotative. La cuve peut être rotative par rapport à son axe longitudinal, lequel est sensiblement horizontal ou, le cas échéant, incliné par rapport au sol. Le produit alimentaire peut être mis en mouvement du fait de la rotation de la cuve. La cuve peut être mise en rotation durant tout ou partie de l'étape b).

Le malaxeur est, en variante, équipé d'un organe de brassage, par exemple d'une pale rotative, d'un axe rotatif ou d'un bras rotatif. Le produit alimentaire peut être mis en mouvement par l'organe de brassage. La cuve peut, lorsque le malaxeur est équipé d'un organe de brassage, être fixe ou pivotante. L'organe de brassage et/ou la cuve peuvent être mis en mouvement durant tout ou partie de l'étape b).

Dans une variante préférée, le produit alimentaire est mis en mouvement au sein de l'enceinte durant tout ou partie du séchage par mise sous vide de l'enceinte. Le produit subit, par exemple, durant tout ou partie du séchage par mise sous vide de l'enceinte, un malaxage par retombées du fait de la mise en rotation de la cuve.

La mise en mouvement du produit alimentaire permet avantageusement d'améliorer le séchage du produit alimentaire du fait du mélange réalisé. Ce mélange permet aux différents produits présents dans l'enceinte d'émerger chacun à leur tour de l'ensemble du lot.

La mise sous vide de l'enceinte, lors de l'étape b), peut être imposée continument durant toute l'étape de séchage (i.e. sans interruption durant toute l'étape de séchage) ou être interrompue puis reprise une ou plusieurs fois.

Avantageusement, la pression à l'intérieur de l'enceinte est, durant tout ou partie de l'étape b), inférieure ou égale à 40 mbar (millibar), de préférence comprise entre 1 mbar et 32 mbar, de préférence entre 2 mbar et 20 mbar, de préférence entre 2 mbar et 8 mbar.

L'étape b) peut avoir une durée comprise entre 2 heures et 12 jours, de préférence entre 1 jour et 8 jours.

Dans un exemple de réalisation, le produit alimentaire a perdu, à l'issue de l'étape b), une masse égale à au moins 4% de sa masse prise avant mise en oeuvre de l'étape b), de préférence une masse égale à au moins 8 %, voire 10 %, de sa masse prise avant mise en oeuvre de l'étape b).

Dans un exemple de réalisation, le produit alimentaire peut perdre par jour durant l'étape b) une masse comprise entre 1% et 10% de sa masse prise avant mise en oeuvre de l'étape b).

Dans un exemple de réalisation, le fluide caloporteur est mis au contact du produit alimentaire durant tout ou partie de l'étape b).

Dans un exemple de réalisation, l'enceinte est une enceinte à double enveloppe. Dans ce cas, la double enveloppe peut être alimentée par un réseau chaud notamment d'eau glycolée.

La double enveloppe peut être présente sur une paroi de l'enceinte et/ou sur un organe interne présent dans l'enceinte, notamment sur l'organe de brassage.

En particulier, le réseau peut comporter un système de vannes, utilisant notamment une vanne du type trois voies. Le réseau chaud peut par exemple être chauffé grâce à un réchauffeur électrique et/ou un échangeur (par exemple échangeur à plaque ou échangeur tubulaire) alimenté par un fluide échangeur de chaleur, notamment par de l'eau chaude ou de la vapeur d'eau.

En variante, la double enveloppe peut être alimentée par un groupe chaud/froid.

Dans l'exemple de réalisation où l'apport de chaleur est, durant tout ou partie de l'étape b), réalisé par transfert thermique entre le produit alimentaire et au moins un fluide caloporteur, le fluide caloporteur circule, de préférence, au sein d'une double enveloppe de l'enceinte. Le fluide caloporteur peut circuler au sein d'une double enveloppe présente sur une paroi de l'enceinte et/ou au sein d'une double enveloppe présente sur un organe interne de l'enceinte, notamment sur l'organe de brassage.

Dans un exemple de réalisation, le fluide caloporteur est de l'air ou de la vapeur sèche ou surchauffée.

Dans un exemple de réalisation, le rayonnement électromagnétique utilisé lors de l'étape b) est un rayonnement micro-ondes et/ou radiofréquences.

Par rayonnement « micro-ondes », il faut comprendre un rayonnement de fréquence comprise entre 1 GHz et 300 GHz.

Lorsqu'un rayonnement micro-ondes est appliqué, un générateur de micro-ondes, par exemple un magnétron, peut être présent au sein de l'enceinte ou être relié à celle-ci par un moyen d'acheminement des micro-ondes, par exemple par un guide d'ondes et/ou un câble coaxial.

Par rayonnement « radiofréquences », il faut comprendre un rayonnement de fréquence inférieure ou égale à 3000 GHz.

Dans une variante préférée, la température du produit alimentaire augmente durant l'étape b). La température du produit alimentaire durant l'étape b) peut augmenter de manière strictement monotone. En variante, la température du produit alimentaire peut durant l'étape b) augmenter tout en présentant des paliers sur lesquels la température est constante.

La température du produit alimentaire, durant tout ou partie de l'étape b), peut être comprise entre 4 °C et 50 °C, de préférence entre 4°C et 24°C.

La température du produit alimentaire à l'issue de l'étape b) peut être supérieure ou égale à 6 °C, de préférence à 7 °C, par exemple supérieure ou égale à 8 °C, par exemple à 12 °C.

Dans une variante préférée, le procédé comporte, en outre, une étape c) d'étuvage, dans laquelle l'enceinte est, de préférence, portée à une température supérieure ou égale à 20°C, de préférence comprise entre 22 °C et 55 °C, et à une pression supérieure ou égale à 24 mbars, de préférence comprise entre 200 mbars et 1020 mbars.

La conduite d'une telle étape d'étuvage est avantageuse car elle permet de favoriser l'oxydation des matières grasses, cette oxydation constituant un des principaux mécanismes impliqués dans le développement aromatique des produits alimentaires carnés, notamment des produits de salaison.

L'étape c) est, par exemple, initiée après la fin de l'étape b), et peut être menée au sein du malaxeur.

Un tel cumul de phases au sein d'un même malaxeur conduit avantageusement à des gains de productivité, des gains d'espace au sol, des limitations importantes des rejets, une amélioration de la qualité sanitaire des produits et des gains de temps particulièrement importants.

Dans une variante préférée, une température d'une pellicule extérieure du produit alimentaire est, avant mise en oeuvre de l'étape b), inférieure à une température du coeur du produit alimentaire.

On entend par « pellicule extérieure », un volume périphérique du produit s'étendant le long de tout ou partie de la surface extérieure dudit produit. Ce volume sépare le coeur du produit du milieu extérieur, le coeur du produit étant situé plus en profondeur au sein du produit que la pellicule extérieure.

Cette caractéristique permet avantageusement d'équilibrer les cinétiques de séchage à coeur et en surface, du fait de la création artificielle d'un écart de température entre le coeur et la pellicule extérieure avant soumission à un vide évaporatif, et d'induire un séchage plus homogène entre la pellicule extérieure et le coeur.

Dans ce cas, l'eau de la pellicule extérieure est évaporée plus lentement alors que l'eau du coeur, plus chaude, est évaporée plus vite. Il s'ensuit une limitation du gradient de séchage entre la pellicule extérieure et le coeur du produit et une diminution du risque de croutage. Cette méthode de séchage est qualifiée de « chaud - froid - sec » (« HCD » pour « *hot - cold - dry* »).

On peut obtenir cet écart de température par une gestion temporelle alternée d'apport de chaud et de froid, par tout moyen connu par l'homme du métier. L'écart de température peut être obtenu de façon cyclique en alternant chauffage, homogénéisation, refroidissement, évaporation sous vide et en répétant ce cycle autant de fois que nécessaire.

La différence de température entre le coeur et la pellicule extérieure du produit alimentaire peut, avant mise en oeuvre de l'étape b), être supérieure ou égale à 0,3 °C, de préférence à 5 °C.

Dans un exemple de réalisation, la pellicule extérieure du produit s'étend sur une profondeur d'au moins 0,5 mm, notamment 1 mm, notamment 5 mm, notamment 1 cm, du produit alimentaire.

La différence de température entre le coeur et la pellicule extérieure du produit alimentaire peut être obtenue par la mise en oeuvre des étapes suivantes :
i) chauffage du produit alimentaire,
ii) optionnellement stabilisation de la température du produit alimentaire obtenu à l'issue de l'étape i),
iii) refroidissement de surface du produit alimentaire obtenu à l'issue des étapes i) ou ii), de manière à obtenir une température de la pellicule extérieure du produit alimentaire inférieure à la température de son coeur.

Le chauffage de l'étape i) est avantageusement le plus homogène possible.

Dans une variante préférée, la succession des étapes i) à ii) et de l'étape b) ou i) à iii) et de l'étape b) est répétée.

On peut donc réaliser plusieurs fois le cycle suivant :
- étape i), puis
- optionnellement étape ii), puis
- étape iii), puis
- étape b), puis
- retour à l'étape i).

Dans une variante préférée, on réalise un salage du produit alimentaire, le salage ayant, de préférence, lieu avant l'étape b) et/ou durant tout ou partie de l'étape b). Le salage peut ou non être réalisé dans l'enceinte du malaxeur utilisé pour le séchage sous vide.

La combinaison du salage et du séchage dans le même malaxeur permet avantageusement de poursuivre le salage tout au long du séchage et donc de réduire le temps de salage, puisqu'une partie de cette étape est réalisée pendant le séchage.

Dans une variante, on réalise un salage par voie humide, le produit alimentaire étant notamment durant le salage au contact d'une saumure. Le produit alimentaire peut être mis en contact avec une saumure en prise directe dans le malaxeur ou par injection de la saumure au sein du produit avant le malaxage au moyen par exemple d'un injecteur.

Un salage par voie humide permet avantageusement d'améliorer le salage réalisé.

La durée du salage réalisé peut être comprise entre 1 heure et 7 jours.

Dans une variante préférée, le produit alimentaire subissant l'étape b) présente une ou plusieurs découpes, notamment formée(s) avant mise en oeuvre de l'étape b).

La présence d'une ou plusieurs découpes permet avantageusement d'accélérer les dynamiques de séchage évaporatif et, le cas échéant, de salage. En effet, la porosité du produit alimentaire est augmentée, ce qui accélère l'ensemble des mécanismes hydrodynamiques (non-diffusionnels) réalisés par la conduite des opérations sous vide comme l'infiltration sous vide des ingrédients et l'expulsion de la vapeur d'eau provenant du coeur du produit lors du séchage sous vide évaporatif.

Dans un exemple de réalisation, les découpes peuvent être formées à l'aide d'une matrice de sabres et/ou d'aiguilles par un procédé dit de sabrage, microsabrage ou attendrissage ou à l'aide de lames rotatives par un procédé dit de lacération ou de « steakage ».

Dans une variante préférée, le produit alimentaire subit, après la fin de l'étape b), une étape d) de mise en forme, notamment au moyen d'une presse.

L'étape d) comporte avantageusement une étape de mise sous vide du produit.

La conduite en malaxeur d'un séchage sous vide évaporatif et, le cas échéant, d'un salage et/ou d'un étuvage, permet avantageusement d'obtenir un produit semi-fini ou un produit fini. Ainsi, dès la sortie du malaxeur, le produit peut avantageusement être mis en forme.

De manière particulièrement préférée, le produit alimentaire est choisi parmi la liste suivante : jambon cru, coppa, viande des Grisons, filet de dinde, petits morceaux de viande, pièces de viande maigres destinées à la fabrication de saucisson.

Selon un autre de ses aspects, la présente invention concerne un produit alimentaire, notamment carné, séché caractérisé en ce qu'il est obtenu par un procédé tel que décrit plus haut.

Un tel produit présente avantageusement un taux d'hydratation après séchage relativement bas.

Selon un autre de ses aspects, l'invention concerne une utilisation d'un apport de chaleur à un produit alimentaire, notamment un produit alimentaire carné, subissant, au sein d'une enceinte définie par la cuve d'un malaxeur, une étape de séchage par mise sous vide de l'enceinte, pour améliorer la déshydratation dudit produit.

Dans un mode de réalisation préféré, l'apport de chaleur étant réalisé par transfert thermique entre au moins un fluide caloporteur et le produit et/ou par irradiation dudit produit par un rayonnement électromagnétique.

Comme expliqué plus haut, le produit peut être mis en mouvement durant tout ou partie de l'étape de séchage sous vide.

Le procédé selon l'invention peut encore être combiné à l'utilisation d'un logiciel de suivi des paramètres liés au traitement des produits alimentaires, notamment le temps, la température, la pression et/ou la masse du produit.

Dans le but de mieux faire comprendre l'invention, on va maintenant décrire des exemples de modes de réalisation du procédé selon l'invention en se référant au dessin annexé sur lequel :
- la figure 1 représente l'évolution de la température d'ébullition de l'eau en fonction de la pression,
- la figure 2 représente une vue schématique longitudinale d'un premier exemple de malaxeur pouvant être utilisé dans le procédé selon l'invention,
- la figure 3 représente une vue schématique longitudinale d'un second exemple de malaxeur pouvant être utilisé dans le procédé selon l'invention,
- la figure 4 représente une vue d'un malaxeur utilisable dans le cadre des procédés selon l'invention, et
- les figures 5 à 9 représentent des conditions expérimentales et résultats expérimentaux relatifs à des procédés selon l'invention.

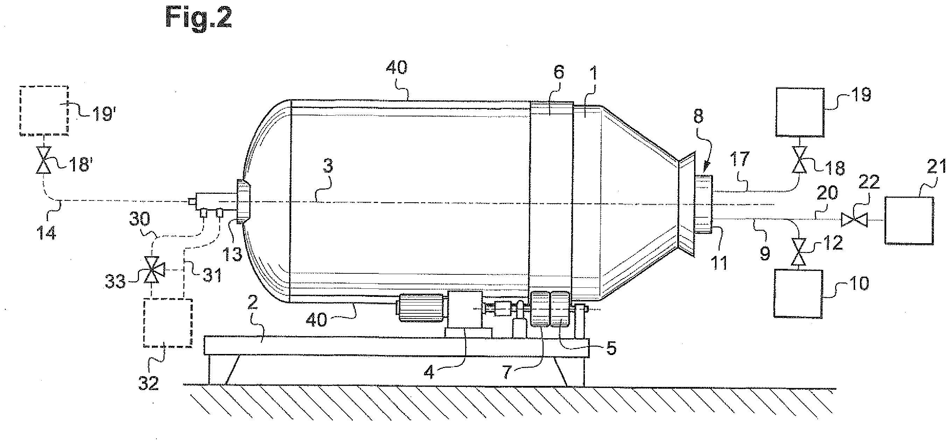

On a représenté sur la figure 2 un malaxeur comportant une cuve 1 montée sur un châssis 2 autour d'un axe de rotation sensiblement horizontal 3. Un moyen de brassage tel qu'une pale droite ou hélicoïdale (non représentée) est prévu à l'intérieur de la cuve.

Pour entraîner la cuve 1 en rotation, le châssis 2 comporte un moteur 4 solidaire en rotation d'un organe d'entraînement 5.

La cuve comporte une zone de friction périphérique 6 qui coopère avec une roue de friction 7 de l'organe d'entraînement 5.

La partie avant de la cuve, située à droite sur le dessin, présente une forme tronconique convergente à l'extrémité de laquelle est située une porte étanche 8 qui permet le chargement et le déchargement des produits alimentaires à traiter dans le cuve 1.

Dans la partie centrale de la porte étanche pénètre une canalisation 9 reliant l'intérieur de la cuve 1 à une pompe à vide 10 permettant l'application du vide primaire dans la cuve, la canalisation 9 étant pourvue d'une vanne 12.

Sur la canalisation 9 est branchée une canalisation 20 pourvue d'une vanne 22 reliant l'intérieur de la cuve à un générateur de vide poussé 21.

Le vide mis en oeuvre pour l'étape b) peut être obtenu à l'aide d'une pompe à vide performante (par exemple : pompe à palettes, pompe à anneau liquide, pompe à vis...) pouvant être accouplée à un surpresseur à lobes (« roots ») un éjecteur pouvant le cas échéant être adjoint à ce montage. Le débit de la pompe à vide peut être d'environ : 0,1 à 5,0 m³/h par kg du produit alimentaire traité.

Dans la partie centrale de la cuve peut pénétrer également une canalisation 14 reliée à un générateur de vapeur 19 et pourvue d'une vanne 18.

Les canalisations 9 et 17, dans l'exemple de la figure 1, sont pourvues d'un raccord tournant 11 qui permet la rotation de la cuve 1 autour de son axe 3 sans détérioration des canalisations. La canalisation 17 est reliée directement à l'intérieur de la cuve 1 par la porte 8 et le raccord tournant 11.

A l'arrière de la cuve 1 (à gauche sur le dessin), peut pénétrer également une canalisation 14 reliée à un générateur de vapeur 19' et pourvue d'une vanne 18'. La canalisation 19' pénètre à l'intérieur de la cuve 1 par un raccord tournant 13 situé à l'arrière de la cuve 1.

Un groupe chaud/froid 32 est relié à la double enveloppe 40 de la cuve 1 par l'intermédiaire de canalisations 30 et 31 munies d'une vanne 33. Ce groupe chaud/froid 32 permet l'apport de chaleur au produit alimentaire lorsque l'enceinte est mise sous vide.

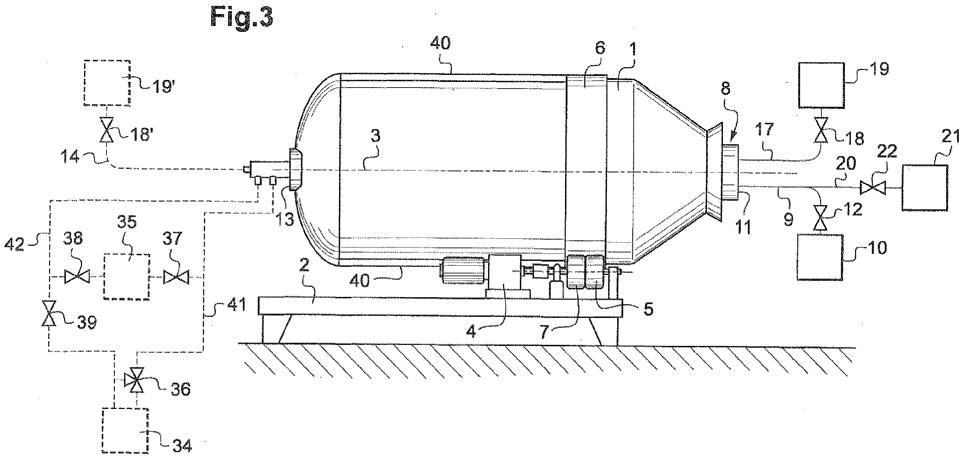

On a représenté sur la figure 3 un autre malaxeur comportant une cuve 1.

Dans cet exemple, un réseau d'eau glycolée remplace le groupe chaud/froid 32 décrit à la figure 2. Dans l'exemple de la figure 3, l'eau glycolée permet l'apport de chaleur au produit alimentaire lorsque l'enceinte est mise sous vide.

Le réseau d'eau glycolée comporte un générateur d'eau glycolée 34 et un échangeur (par exemple échangeur à plaque ou échangeur tubulaire) 35. En variante, l'échangeur 35 pourrait être remplacé par un réchauffeur électrique.

Le réseau d'eau glycolée comporte également un système de vannes 36, 37, 38 et 39, notamment des vannes du type trois voies, les vannes 37 et 38 étant situées de part et d'autre de l'échangeur 35.

Deux canalisations 41 et 42 permettent de plus de relier le réseau d'eau glycolée à la double enveloppe 40 de la cuve 1.

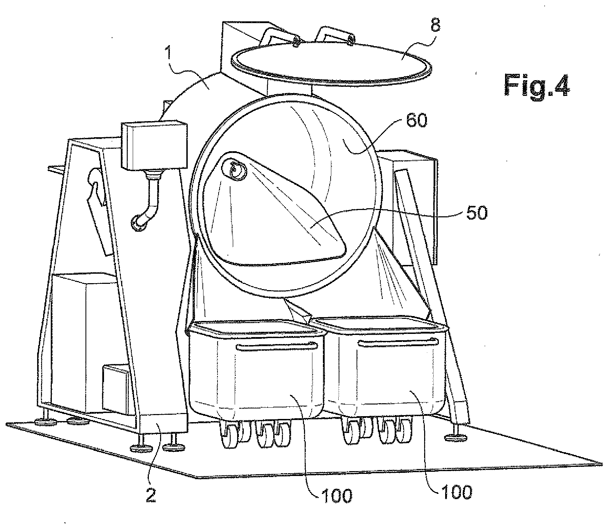

On a représenté à la figure 4 un mélangeur dont la porte étanche 8 est en position ouverte. Comme représenté, un organe de brassage 50, qui peut être une pale comme représenté ou un bras ou un axe mélangeur articulé, est présent dans l'enceinte 60 dans laquelle le produit alimentaire est destiné à être introduit. Le mélangeur peut être vertical ou bien horizontal, de type pétrin-mélangeur. Un ou plusieurs récipients 100 sont présents à l'extérieur de la cuve de manière à pouvoir recevoir après mise en oeuvre du procédé selon l'invention le produit alimentaire séché.

L'invention n'est pas limitée aux exemples de réalisation qui viennent d'être décrits.

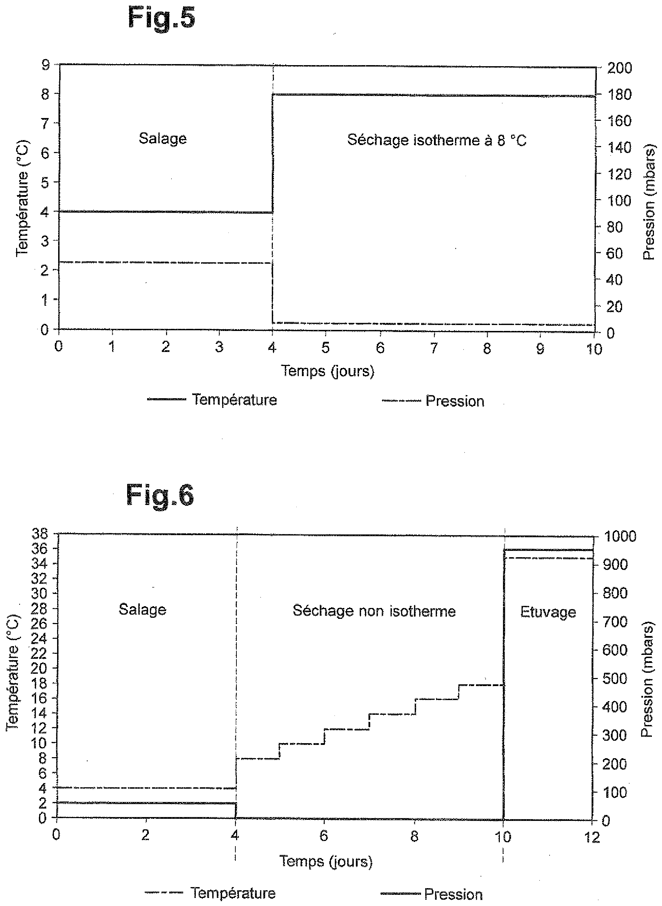

On a représenté à la figure 5 les conditions d'un procédé selon l'invention dans lequel un salage est initié avant un séchage isotherme sous vide évaporatif. Le salage effectué a une durée de 4 jours et a été effectué à 4 °C et la température du produit est maintenue à 8 °C lors du séchage isotherme sous vide évaporatif. Les produits alimentaires mis en oeuvre sont des jambons de porc ouverts.

La pression imposée durant une partie au moins de l'étape de salage peut être supérieure ou égale à 20 mbars, de préférence à 25 mbars, de préférence à 30 mbars.

Dans les conditions de la figure 5, des pertes en eau plus élevées que 6 % en séchage par le vide en conditions isothermes à 8 °C ont été obtenues.

Afin d'accélérer encore le processus, il est possible de conduire l'évaporation sous vide en augmentant progressivement la température du produit de façon à maintenir un bon potentiel évaporatif au fur et à mesure que l'activité de l'eau du produit diminue (figure 6). Les conditions de la figure 6 sont les suivantes : salage de 4 jours à 4 °C, séchage à température croissante de 8 à 18 °C sous vide évaporatif, et étuvage à 35 °C de jambons de porc ouverts.

Un étuvage à température élevée peut être conduit à pression atmosphérique ou sous une dépression très faible pour favoriser le contact avec l'oxygène, ou bien encore sous vide plus important - éventuellement avec des cycles de vide pulsé ou vide poumon - pour que l'aliment reste en contact avec l'oxygène (figure 6).

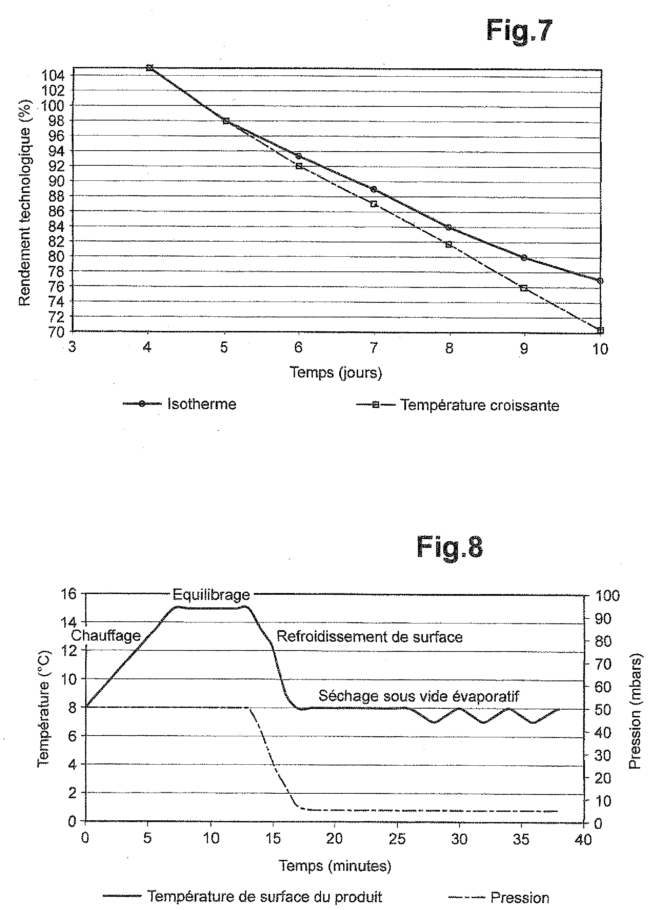

La figure 7 compare les performances d'un séchage sous vide évaporatif en conditions isothermes et en conditions de température croissante.

D'un point de vue sanitaire, la montée progressive de la température de la viande est rendue possible par la baisse rapide et simultanée de l'activité de l'eau du produit. La mise en oeuvre d'un séchage en conditions de température variables conduit à des séchages plus importants (figure 7).

On a représenté à la figure 8 un exemple de cycle permettant de réaliser un séchage plus homogène entre le coeur et la pellicule extérieure lorsque le produit est soumis à un vide évaporatif.

Le produit subit tout d'abord une étape de chauffage afin de chauffer de la manière la plus homogène possible le produit.

Cette étape de chauffage (étape i)) peut avoir une durée comprise entre 10 minutes et 24 heures, de préférence entre 30 minutes et 8 heures, de préférence entre 1 heure et 4 heures.

Une fois le produit chauffé de la manière la plus homogène possible, il subit une étape d'équilibrage de sa température (étape ii)).

Une étape de refroidissement de surface est alors menée de façon à plus refroidir la pellicule extérieure du produit que son coeur avant mise en oeuvre du séchage évaporatif.

L'étape de refroidissement de surface peut être réalisée à l'aide d'une double enveloppe alimentée en fluide caloporteur refroidi, par injection directe d'un fluide cryogénique ou simplement par augmentation du vide du milieu dans lequel le produit alimentaire est placé.

La figure 9 montre l'évolution de la valeur de salinométrie en surface et à coeur d'un jambon de porc désossé selon la méthode dite de l'os coulé, salé et séché sous vide évaporatif dans un malaxeur.

La rapidité du séchage réalisé sous vide évaporatif en malaxeur permet d'envisager de formuler les produits destinés au séchage par voie humide (saumure) afin d'accélérer encore le salage.

L'expression « comportant un(e) » doit être comprise comme « comportant au moins un(e) ».

L'expression « compris entre ... et ... » ou « allant de ... à ... » doit s'entendre comme incluant les bornes.

## Revendications

1. Procédé de séchage d'un produit alimentaire, comportant les étapes consistant à :
a) introduire dans une enceinte (60) le produit alimentaire, l'enceinte (60) étant définie par la cuve (1) d'un malaxeur, et
b) sécher le produit alimentaire présent dans l'enceinte (60) par mise sous vide de l'enceinte (60), les conditions de pression et de température pendant l'étape de séchage étant choisies de façon à se placer dans le domaine du diagramme de phase de l'eau pure où celle-ci est à l'état gazeux,
procédé dans lequel un apport de chaleur au produit présent dans l'enceinte (60) est effectué lorsque l'enceinte (60) est mise sous vide durant l'étape b) de façon à maintenir constante et/ou augmenter la température dudit produit durant tout ou partie du séchage par mise sous vide de l'enceinte (60), l'apport de chaleur étant réalisé par transfert thermique entre au moins un fluide caloporteur et le produit, le fluide caloporteur circulant au sein d'une double enveloppe de l'enceinte, et/ou par irradiation dudit produit par un rayonnement électromagnétique, la pression dans l'enceinte (60) étant, durant tout ou partie de l'étape b), inférieure ou égale à 200 mbar.

2. Procédé selon la revendication 1, la pression dans l'enceinte (60) durant tout ou partie de l'étape b) étant comprise entre 2 et 20 mbar.

3. Procédé selon l'une des revendications 1 ou 2, dans lequel on réalise un salage du produit alimentaire, le salage ayant, de préférence, lieu avant l'étape b) et/ou durant tout ou partie de l'étape b).

4. Procédé selon la revendication précédente, dans lequel on réalise un salage par voie humide, le produit alimentaire étant notamment durant le salage au contact d'une saumure.

5. Procédé selon l'une quelconque des revendications précédentes, comportant, en outre, une étape c) d'étuvage, dans laquelle l'enceinte (60) est, de préférence, portée à une température supérieure ou égale à 20°C, de préférence comprise entre 22 °C et 55 °C, et à une pression supérieure ou égale à 24 mbars, de préférence comprise entre 200 mbars et 1020 mbars.

6. Procédé selon la revendication 5, dans lequel l'étape c) est initiée après la fin de l'étape b).

7. Procédé selon l'une quelconque des revendications précédentes, dans lequel une température d'une pellicule extérieure du produit alimentaire est, avant mise en oeuvre de l'étape b), inférieure à une température du coeur du produit alimentaire.

8. Procédé selon la revendication précédente, dans lequel la différence de température entre le coeur et la pellicule extérieure du produit alimentaire est obtenue par la mise en oeuvre des étapes suivantes :
i) chauffage du produit alimentaire,
ii) optionnellement stabilisation de la température du produit alimentaire obtenu à l'issue de l'étape i),
iii) refroidissement de surface du produit alimentaire obtenu à l'issue des étapes i) ou ii), de manière à obtenir une température de la pellicule extérieure du produit alimentaire inférieure à la température de son coeur,
la succession des étapes i) à ii) et de l'étape b) ou i) à iii) et de l'étape b) étant, de préférence, répétée.

9. Procédé selon l'une quelconque des revendications précédentes, dans lequel le produit alimentaire subissant l'étape b) présente une ou plusieurs découpes, notamment formée(s) avant mise en oeuvre de l'étape b).

10. Procédé selon l'une quelconque des revendications précédentes, dans lequel le produit alimentaire subit, après la fin de l'étape b), une étape d) de mise en forme, notamment au moyen d'une presse.

11. Procédé selon l'une quelconque des revendications précédentes, dans lequel l'apport de chaleur réalisé durant l'étape b) est réalisé par transfert thermique entre le produit alimentaire et au moins un fluide caloporteur.

12. Procédé selon l'une quelconque des revendications précédentes, dans lequel le produit alimentaire a perdu, à l'issue de l'étape b), une masse égale à au moins 4% de sa masse prise avant mise en oeuvre de l'étape b), de préférence une masse égale à au moins 10 % de sa masse prise avant mise en oeuvre de l'étape b).

13. Procédé selon l'une quelconque des revendications précédentes, dans lequel le produit alimentaire est mis en mouvement au sein de l'enceinte (60) durant tout ou partie du séchage par mise sous vide de l'enceinte (60).

## Patentansprüche

1. Verfahren zum Trocknen eines Lebensmittelprodukts, mit den Schritten, die bestehen in:
a) Eingeben des Lebensmittelprodukts in ein Behältnis (60), wobei das Behältnis (60) durch den Bottich (1) eines Rührwerks gebildet wird, und
b) Trocknen des in dem Behältnis (60) enthaltenen Lebensmittelprodukts durch Evakuieren des Behältnisses (60), wobei die Druck- und Temperaturbedingungen während des Trocknungsschrittes so gewählt sind, dass sie im Phasendiagramm von reinem Wasser in einem Bereich liegen, wo dieses sich im gasförmigen Zustand befindet,
bei welchem Verfahren eine Wärmezufuhr zu dem in dem Behältnis (60) enthaltenen Produkt bewirkt wird, wenn das Behältnis (60) während des Schrittes b) evakuiert wird, in der Weise, dass die Temperatur des Produkts während der Gesamtdauer oder eines Teils der Trocknung durch Evakuieren des Behältnisses (60) konstant gehalten oder erhöht wird, wobei die Zufuhr von Wärme durch Wärmeübertragung zwischen wenigstens einem Wärmeträgerfluid und dem Produkt bewirkt wird, wobei das Wärmeträgerfluid in einem Doppelmantel des Behältnisses zirkuliert und/oder durch Bestrahlung des Produkts mit elektromagnetischer Strahlung, wobei der Druck in dem Behältnis (60) während der Gesamtdauer oder eines Teils des Schrittes b) kleiner oder gleich 200 mbar ist.

2. Verfahren nach Anspruch 1, bei dem der Druck in dem Behältnis (60) während der Gesamtdauer oder eines Teils des Schrittes b) zwischen 2 und 20 mbar liegt.

3. Verfahren nach Anspruch 1 oder 2, bei dem das Lebensmittelprodukt gepökelt wird, wobei das Pökeln vorzugsweise vor dem Schritt b) und/oder während der Gesamtdauer oder eines Teils des Schrittes b) stattfindet.

4. Verfahren nach dem vorstehenden Anspruch, bei dem ein Nasspökeln durchgeführt wird, wobei das Lebensmittelprodukt beim Pökeln insbesondere mit einer Lake in Kontakt gebracht wird.

5. Verfahren nach einem der vorstehenden Ansprüche, weiterhin mit einem Schritt c) des Temperns, bei dem das Behältnis (60) vorzugsweise auf eine Temperatur größer oder gleich 20 °C gebracht wird, vorzugsweise zwischen 22 °C und 55 °C und bei einem Druck größer oder gleich 24 mbar, vorzugsweise zwischen 200 mbar und 1020 mbar.

6. Verfahren nach Anspruch 5, bei dem der Schritt c) nach dem Ende des Schrittes b) eingeleitet wird.

7. Verfahren nach einem der vorstehenden Ansprüche, bei dem eine Temperatur einer Außenschicht des Lebensmittelprodukts vor der Ausführung des Schrittes b) unterhalb einer Temperatur des Kerns des Lebensmittelprodukts gehalten wird.

8. Verfahren nach dem vorstehenden Anspruch, bei dem die Temperaturdifferenz zwischen dem Mantel und der äußeren Schicht des Lebensmittelproduktes mit Hilfe der folgenden Schritte eingestellt wird:
i) Erhitzen des Lebensmittelprodukts,
ii) wahlweise stabilisieren der Temperatur des Lebensmittelprodukts, die am Ende des Schrittes i) erhalten wurde,
iii) Kühlen der Oberfläche des Lebensmittelprodukts, das am Ende des Schrittes i) oder ii) erhalten wurde, derart, dass man eine Temperatur der äußeren Schicht des Lebensmittelprodukts erhält, die kleiner ist als die Temperatur des Kerns,
wobei die Abfolge der Schritte i) bis ii) und des Schrittes b) oder i) bis iii) und des Schrittes b) vorzugsweise wiederholt wird.

9. Verfahren nach einem der vorstehenden Ansprüche, bei dem das Lebensmittelprodukt, das dem Schritt b) unterzogen wird, einen oder mehrere Schnitte aufweist, die insbesondere vor der Ausführung des Schrittes b) gebildet werden.

10. Verfahren nach einem der vorstehenden Ansprüche, bei dem das Lebensmittelprodukt nach dem Ende des Schrittes b) einem Schritt d) der Formgebung unterzogen wird, insbesondere mit Hilfe einer Presse.

11. Verfahren nach einem der vorstehenden Ansprüche, bei dem die Zufuhr von Wärme während des Schrittes b) durch Wärmeübertragung zwischen dem Lebensmittelprodukt und wenigstens einem Wärmeträgerfluid bewirkt wird.

12. Verfahren nach einem der vorstehenden Ansprüche, bei dem das Lebensmittelprodukt am Ende des Schrittes b) eine Masse verloren hat, die wenigstens gleich 4% seiner Masse zu Beginn des Schrittes b) ist, vorzugsweise eine Masse, die mindestens gleich 10% seiner Masse zu Beginn des Schrittes b) ist.

13. Verfahren nach einem der vorstehenden Ansprüche, bei dem das Lebensmittelprodukt im Inneren des Behältnisses (60) während der Gesamtdauer oder eines Teils der Trocknung durch Evakuieren des Behältnisses (60) in Bewegung gesetzt wird.

## Claims

1. A method for drying a food product, comprising steps consisting in:
a) introducing the food product into an enclosure (60), the enclosure (60) being defined by the tank (1) of a mixer, and
b) drying the food product present in the enclosure (60) by applying a vacuum to the enclosure (60), the pressure and temperature conditions during the drying step being chosen so as to obtain the range of the phase diagram of pure water where the latter is in the gaseous state,
method in which heat is applied to the product present in the enclosure (60) when the vacuum is applied to the enclosure (60) during the step b) so as to keep the temperature of said product constant and/or increase it during all or part of the drying by application of a vacuum to the enclosure (60), the heat being applied by heat transfer between at least one heat transfer fluid and the product, the heat transfer fluid circulating within a double jacket of the enclosure (60) and/or by irradiation of said product by an electromagnetic radiation, the pressure in the enclosure (60) being, during all or part of the step b), less than or equal to 200 mbar.

2. The method as claimed in claim 1, the pressure in the enclosure (60) during all or part of the step b) being between 2 and 20 mbar.

3. The method as claimed in one of claims 1 or 2, in which a salting of the food product is performed, the salting preferably taking place before the step b) and/or during all or part of the step b).

4. The method as claimed in the preceding claim, in which a salting by wet means is performed, the food product being in particular in contact with a brine during the salting.

5. The method as claimed in any one of the preceding claims, further comprising a step c) of baking, in which the enclosure (60) is, preferably, raised to a temperature greater than or equal to 20°C, preferably between 22°C and 55°C, and to a pressure greater than or equal to 24 mbar, preferably between 200 mbar and 1020 mbar.

6. The method as claimed in claim 5, in which the step c) is initiated after the end of the step b).

7. The method as claimed in any one of the preceding claims, in which a temperature of an outer skin of the food product is, before the implementation of the step b), less than a temperature of the core of the food product.

8. The method as claimed in the preceding claim, in which the temperature difference between the core and the outer skin of the food product is obtained by the implementation of the following steps:
i) heating of the food product,
ii) optionally, stabilization of the temperature of the food product obtained at the end of the step i),
iii) surface cooling of the food product obtained at the end of the steps i) or ii), so as to obtain a temperature of the outer skin of the food product which is less than the temperature of its core,
the succession of steps i) to ii) and step b) or steps i) to iii) and step b) being, preferably, repeated.

9. The method as claimed in any one of the preceding claims, in which the food product undergoing the step b) exhibits one or more cut-outs, in particular formed before implementation of the step b).

10. The method as claimed in any one of the preceding claims, in which the food product undergoes, after the end of the step b), a step d) of shaping, in particular by means of a press.

11. The method as claimed in any one of the preceding claims, in which the application of heat performed during the step b) is produced by heat transfer between the food product and at least one heat transfer fluid.

12. The method as claimed in any one of the preceding claims, in which the food product has lost, at the end of the step b), a weight equal to at least 4% of its weight taken before the implementation of the step b), preferably a weight equal to at least 10% of its weight taken before the implementation of the step b).

13. The method as claimed in any one of the preceding claims, in which the food product is set in motion within the enclosure (60) during all or part of the drying by application of a vacuum to the enclosure (60).
